Europäisches Patentamt

European Patent Office

Office européen des brevets

(11) Veröffentlichungsnummer: **0 063 096 B1**

# EUROPÄISCHE PATENTSCHRIFT

(45) Veröffentlichungstag der Patentschrift:
31.10.84

(21) Anmeldenummer: 82730028.6

(22) Anmeldetag: 12.03.82

(51) Int. Cl.³: **B 65 G 51/32**

(54) **Rohrpoststation mit einem in eine Durchfahrstellung, eine Empfangsstellung und eine Sendestellung verschwenkbaren Verbindungsrohr.**

(30) Priorität: 06.04.81 DE 3114418

(43) Veröffentlichungstag der Anmeldung:
20.10.82 Patentblatt 82/42

(45) Bekanntmachung des Hinweises auf die Patenterteilung:
31.10.84 Patentblatt 84/44

(84) Benannte Vertragsstaaten:
AT CH DE FR GB LI

(56) Entgegenhaltungen:
AT - B - 317 767
DE - A - 2 905 994
DE - B - 1 257 064
DE - B - 1 908 766
FR - A - 2 291 129

(73) Patentinhaber: **Siemens Aktiengesellschaft, Berlin und München Wittelsbacherplatz 2, D-8000 München 2 (DE)**

(72) Erfinder: **Kardinal, Hans-Joachim, Ing.-grad., Am Waldhaus 27, D-1000 Berlin 38 (DE)**
Erfinder: **Ahr, Dieter, Ing. grad., Zinsweilerweg 25, D-1000 Berlin 37 (DE)**

**Beschreibung**

Die Erfindung betrifft eine Rohrpoststation mit einem innerhalb eines Stationsgehäuses fluchtend an einen von oben und einen von unten in das Stationsgehäuse eintretenden Fahrrohrstrang anschließenden Verbindungsrohr, das an einem Ende mittels eines in einem Schiebergehäuse gelagerten und mittels einer ventilgesteuerten Luftleitung überbrückten Schiebers wahlweise abdeckbar oder freigebbar ist und das mit seinem oberen Ende in die Flucht eines in die obere Begrenzungsfläche des Stationsgehäuses eingefügten und mit einer Rückhaltevorrichtung für abzusendende Rohrpostbüchsen ausgestatteten Senderrohres sowie mit seinem unteren Ende in den Bereich einer Empfangsöffnung in der unteren Begrenzungsfläche des Stationsgehäuses bewegbar ist.

Bei einer bekannten derartigen Rohrpoststation — DE-A-2 905 994 — ist das Verbindungsrohr senkrecht zu seiner Längsachse verschiebbar. Sowohl der von oben als auch der von unten in das Stationsgehäuse eintretende Fahrrohrstrang weist Öffnungen auf, die in einen Luftkanal münden, über den die beiden Fahrrohrstränge miteinander verbunden sind. In diesem Luftkanal befindet sich ein nach einer Richtung wirkendes Rückschlagventil. Im unteren Randbereich des Verbindungsrohres ist ein Schiebergehäuse angeordnet, in dem ein Schieber senkrecht zur Längsachse des Verbindungsrohres derart verschiebbar ist, daß das untere Ende des Verbindungsrohres wahlweise abgedeckt oder freigegeben werden kann. Für den Empfang einer ankommenden Rohrpostbüchse wird der Schieber in das Verbindungsrohr eingefahren; die ankommende Rohrpostbüchse gleitet damit pneumatisch gebremst auf den Schieber herab. Nach Abschalten des Fördergebläses wird das Verbindungsrohr solange parallel verschoben bis es in Flucht zur Ausschleuseöffnung steht. Der Schieber wird daraufhin zurückgezogen, so daß die Rohrpostbüchse durch die Ausschleuseöffnung in einen Auffangbehälter fallen kann. Anschließend wird das Verbindungsrohr wieder in die Durchfahrstellung zurückgestellt.

Die fluchtende Lage des Verbindungsrohres mit der Ausschleuseöffnung entspricht zugleich der fluchtenden Lage des Verbindungsrohres mit dem Senderohr. Eine zur Absendung bestimmte Rohrpostbüchse kann bei fluchtender Lage des Verbindungsrohres mit dem Senderohr noch nicht in dieses eingeführt werden, da der untere Endbereich des Senderohres durch eine schaltbare Rückhaltevorrichtung abgeriegelt ist. Die Übernahme einer Rohrpostbüchse erfolgt erst nach Ausschleusen der empfangenen Rohrpostbüchse und nachfolgendem erneuten Verschließen des unteren Randbereiches des Verbindungsrohres durch den Schieber.

Die Erfindung geht nun insofern von einer Abwandlung der bekannten Rohrpoststation aus, als der Schieber nicht im unteren Bereich des Verbindungsrohres, sondern am oberen Ende des Verbindungsrohres angeordnet ist. Zum Empfang bestimmte Rohrpostbüchsen müssen daher immer von unten in die Rohrpoststation eintreten und kommen mit ihrer oberen Stirnfläche im Bereich des Schiebers zur Ruhe, wobei diese Ruhelage durch die Aufrechterhaltung des Antriebs über die ventilgesteuerte Luftleitung ermöglicht ist. Rohrpostbüchsen, die zunächst von oben in die Rohrpoststation eintreten, werden durch Freihalten des Verbindungsrohres über den Ort der Rohrpoststation hinausbefördert; nach Verlassen des Stationsbereiches wird die Richtung der antreibenden Luft umgekehrt und die Rohrpostbüchse von unten zur Rohrpoststation zurückbefördert. Diese Abwandlung der bekannten Rohrpoststation steht damit im Zusammenhang, daß besonders schwere Rohrpostbüchsen und mit hohen Luftgeschwindigkeiten transportierte Rohrpostbüchsen beim beschriebenen Empfang von unten langsamer in die Rohrpoststation eintreten und damit im Hinblick sowohl auf die mechanischen Belastungen der Station als auch die Geräuschentwicklung günstigere Betriebsbedingungen vorliegen.

Eine ebenfalls als Sende-, Empfangs- oder Durchlaufstation einsetzbare Rohrpoststation mit einem Schieber im oberen Bereich der Rohrpoststation ist bereits aus der DE-B-1 908 766 bekannt. Wesentliches Verbindungselement dieser Rohrpoststation ist ein Weichenrohr, das in seinem oberen Bereich drehbar gelagert ist und mit seinem unteren Bereich in die Flucht des zweiten Fahrrohrstranges oder einer Ausschleuseöffnung gestellt werden kann. Der Schieber befindet sich unmittelbar oberhalb der Drehlagerung des Weichenrohres. Zum Empfangen einer Rohrpostbüchse bleibt das Weichenrohr in der Flucht der beiden in das Stationsgehäuse einmündenden Fahrrohrstränge; der Schieber wird in den oberen Fahrrohrstrang eingefahren. Eine von unten ankommende Rohrpostbüchse wird damit pneumatisch abgebremst und kommt mit sehr geringer Endgeschwindigkeit am Schieber an. Abzusendende Rohrpostbüchsen können nach dem Verschwenken des Weichenrohres in seine Ausschleusstellung in die untere Fahrrohrstrangöffnung eingeworfen werden; ebenso kann eine abzusendende Rohrpostbüchse im ausgeschwenkten Zustand des Weichenrohres direkt in dasselbe eingeführt werden, wobei hier nicht mehr die Möglichkeit besteht, bereits während des Ausschleusens einer Rohrpostbüchse eine weitere abzusendende Rohrpostbüchse innerhalb der Rohrpoststation in Bereitschaft zu halten oder bereits abzusenden. Es besteht auch die Möglichkeit, eine Rohrpostbüchse von unten durch die Ausschleusöffnung in die Station einzuführen; eine am Weichenrohr befestigte Haltevorrichtung nimmt dabei die Rohrpostbüchse auf und befördert sie bei entsprechendem Verschwenken des Weichenrohres über die untere Fahrrohrstrangöffnung. Das Weichenrohr muß damit neben der Durchfahrstellung und der Ausschleusstellung eine dritte Grundstellung einnehmen können, in der abzusendende Rohrpostbüchsen in den Fahrrohrstrang eingeführt werden. Darüber hinaus ist es konstruktiv schwierig, die Rohrpostbüchse einerseits in der Haltevorrichtung zu sichern und vor sofortigem Herausfallen aus der Einführungsöffnung zu bewahren und andererseits bei fluchtender Lage der Haltevorrichtung mit dem unteren Fahrrohrstrang ein ungehindertes Herausfallen der Rohrpostbüchse zu ermöglichen. Diese Bedingungen sind in der Praxis nur mit zusätzlichem steuerungstechnischem Aufwand und/oder Verlust an einfacher Bedienbarkeit der Rohrpoststation zu erzielen.

Die der Erfindung zugrunde liegende Aufgabe besteht darin, die eingangs definierte Rohrpoststation mit der Abwandlung, daß der Schieber im oberen Endbereich des Verbindungsrohres angeordnet ist, derart auszugestalten, daß das Einschleusen abzusendender Rohrpostbüchsen und das Ausschleusen empfangener Rohrpostbüchsen ohne antriebstechnischen Mehraufwand und mit einfachen konstruktiven Mitteln ermöglicht wird. Dies wird dadurch erreicht, daß das Verbindungsrohr im Zuge seiner Herausbewegung aus der Flucht der Fahrrohrstränge zunächst in die Flucht der Empfangsöffnung und anschließend, dabei die Rückhaltevorrichtung aus ihrer wirksamen Lage auslenkend, in die Flucht des Senderohres gestellt wird, sowie daß der Empfangsöffnung eine Büchsensperrvorrichtung zugeordnet ist, die vom Verbindungsrohr während seiner Bewegung zwischen der mit der Empfangsöffnung und der mit dem Senderohr fluchtenden Lage im Sinne der Überdeckung der Empfangsöffnung mittels eines Büchsenleitelementes sowohl ausgelöst als auch während seiner Bewegung zwischen der mit der Empfangsöffnung und der mit den Fahrrohrsträngen fluchtenden Lage in ihre die Empfangsöffnung freigebende Ausgangslage zurückgestellt wird.

Sofern eine am Ort des Schiebers zur Ruhe gekommene Rohrpostbüchse ausgeschleust werden soll und sich zugleich eine abzusendende Rohrpostbüchse im Senderohr befindet, wird durch den Versatz des Senderohres und der Empfangsöffnung erreicht, daß der Ausschleusvorgang der Rohrpostbüchse ohne Beeinflussung durch die im Senderohr lagernde Rohrpostbüchse erfolgt. Insbesondere kann damit auf elektromagnetisch schaltbare Rückhaltevorrichtungen für das Senderohr verzichtet werden. Damit ist zugleich in einfachster Weise eine Bevorrechtigung für die Durchfahrstellung der Rohrpoststation gegeben, da beim Zurückbewegen des Verbindungsrohres in seine Durchfahrstellung die im Senderohr lagernde Rohrpostbüchse zwangsläufig in diesem verbleibt. Die Überführung einer abzusendenden Rohrpostbüchse erfolgt dagegen zwangsläufig dann, wenn das Verbindungsrohr in die Flucht des Senderohres einfährt.

Eine vorteilhafte Weiterbildung der Erfindung sieht in diesem Zusammenhang vor, daß die Rückhaltevorrichtung als mittels des Verbindungsrohres gegen die Kraft einer Rückstellfeder auslenkbarer Riegel ausgebildet ist. Im Zuge der Rückkehr des Verbindungsrohres aus der mit dem Senderohr fluchtenden Lage in die Durchfahrstellung wird der Riegel durch die Rückstellfeder in seine Ausgangslage zurückbewegt und kann erneut abzusendende Rohrpostbüchsen aufnehmen.

Sofern das Verbindungsrohr über die mit der Empfangsöffnung fluchtende Stellung hinaus — insbesondere in die mit dem Senderohr fluchtende Stellung — geführt wird, wird das Büchsenleitelement ausgelöst. Vom Senderohr in das Verbindungsrohr überführte Rohrpostbüchsen liegen damit mit ihrer Bodenfläche auf dem Büchsenleitelement auf und werden auf diesem entlanggleitend vom Verbindungsrohr mitgenommen, bis dessen fluchtende Lage mit den Fahrrohrsträngen erreicht ist. Selbstverständlich muß der Randbereich des unteren Fahrrohrstranges derart ausgestaltet sein bzw. derart an das Büchsenleitelement anschließen, daß eine Mitnahme der Rohrpostbüchse vom Büchsenleitelement in den Fahrrohrstrang hinein ermöglicht ist.

Die Büchsensperrvorrichtung läßt sich auf verschiedenartige Weise konstruktiv realisieren. Eine besonders vorteilhafte Ausgestaltung der Büchsensperrvorrichtung sieht vor, daß das Büchsenleitelement unterhalb des Verbindungsrohres angeordnet und einerseits auf der dem unteren Fahrrohrstrang zugewandten Seite der Empfangsöffnung schwenkbar gelagert, andererseits auf einem auf der anderen Seite der Empfangsöffnung angeordneten Auflager abgestützt ist, das zumindest bei Ankunft des Verbindungsrohres in seiner mit dem Senderohr fluchtenden Stellung derart ausgelenkt wird, daß das Büchsenleitelement unter der Einwirkung einer Feder in die die Empfangsöffnung überdeckende Lage einschwenkt. Das Büchsenleitelement kann also als Stab oder Platte ausgebildet sein, das mittels eines einfachen Schwenklagers am Stationsgehäuse befestigt und in Schwenkrichtung durch eine Feder belastet ist. Die Ruhelage des Büchsenleitelementes ist durch die Ruhelage des Auflagers vorgegeben; bei Verschieben des Auflagers durch das sich nähernde Verbindungsrohr wird dem Büchsenleitelement die Stütze entzogen und es schwenkt in eine die Empfangsöffnung überdeckende Lage ein. Zweckmäßigerweise wird der Schwenkwinkel dadurch begrenzt, daß das Auflager mit einem Teilbereich seiner Oberfläche einen Anschlag für das eingeschwenkte Büchsenleitelement bildet.

Eine weitere vorteilhafte Ausgestaltung der Erfindung betrifft die Rückstellung des Büchsenleitelementes in seine Ausgangslage, wenn eine in den Fahrrohrstrang einzubringende Rohrpostbüchse den Bereich der Empfangsöffnung zumindest soweit passiert hat, daß nach Entfernen des Büchsenleitelementes aus dem Bereich der Empfangsöffnung eine einwandfreie Mitnahme der Rohrpostbüchse durch das Verbindungsrohr möglich ist. Es wird in diesem Zusammenhang vorgesehen, daß das Büchsenleitelement einen zumindest in seiner eingeschwenkten Lage in die Bewegungsbahn des Verbindungsrohres ragenden Mitnehmer trägt. Die einfachste Realisierung der Mitnahme des Büchsenleitelementes durch das Verbindungsrohr kann beispielsweise durch direkte Einwirkung der Rohrwandung des Verbindungsrohres auf den Mitnehmer erfolgen. Dabei ist denkbar, daß die Ruhelage des Büchsenleitelementes derart bestimmt ist, daß bei maximaler Auslenkung des Büchsenleitelementes durch das Verbindungsrohr gerade die Ruhestellung erreicht ist. Ebenso ist möglich, daß im Zuge der Vorbeiführung des Verbindungsrohres am Büchsenleitelement eine über die Ruhestellung desselben hinausgehende Auslenkung erfolgt und daß erst im Zuge des weiteren Verfahrens des Verbindungsrohres in Richtung auf die mit den Fahrrohrsträngen fluchtende Stellung eine Rückkehr des Büchsenleitelementes in seine Ruhelage erfolgt. Die Ruhelage ist dann durch erneute Auflage des Büchsenleitelementes an dem — unter Einwirkung einer Feder — im Zuge der Fortbewegung des Verbindungsrohres aus der Flucht des Senderohres in seine Ausgangslage zurückschwenkenden Auflager fixiert.

Die Bewegungsbahn des Verbindungsrohres kann sowohl geradlinig als auch bogenförmig sein. Neben der — bei der eingangs beschriebenen Rohrpoststation vorgesehenen — senkrecht zur Längsachse des Verbindungsrohres verlaufenden Bewegung kann auch vorgesehen sein, daß das Verbindungsrohr um eine in seinem mittleren Bereich gelegene Achse schwenkbar ist. Zweckmäßigerweise wird die den Schieber überbrückende Luftleitung mit einem Anschluß ebenfalls in diesem mittleren Bereich gelegt.

Gemäß einer vorteilhaften Weiterbildung der Erfindung ist das Verbindungsrohr mittels einer Kurbelschwinge angetrieben, deren Totlagen der fluchtenden Stellung des Verbindungsrohres mit den Fahrrohrsträngen bzw. mit dem Senderohr entsprechen. Bekanntlich lassen sich beim Einsatz von Kurbelantrieben sehr exakte Endstellungen der angetriebenen Teile erzielen, so daß die fluchtende Lage des Verbindungsrohres einerseits mit den Fahrrohrsträngen und andererseits mit der Sendeöffnung genau eingehalten werden kann. Die fluchtende Stellung des Verbindungsrohres mit der Empfangsöffnung entspricht dann einer Zwischenstellung der Kurbelschwinge zwischen beiden Totlagen.

Die Erfindung wird im folgenden anhand eines in drei Figuren dargestellten Ausführungsbeispiels beschrieben.

Die Fig. 1 zeigt eine schematische Darstellung einer Rohrpoststation im Schnitt.

In den Fig. 2 und 3 ist eine Büchsensperrvorrichtung in zwei verschiedenen Stellungen des Verbindungsrohres dargestellt.

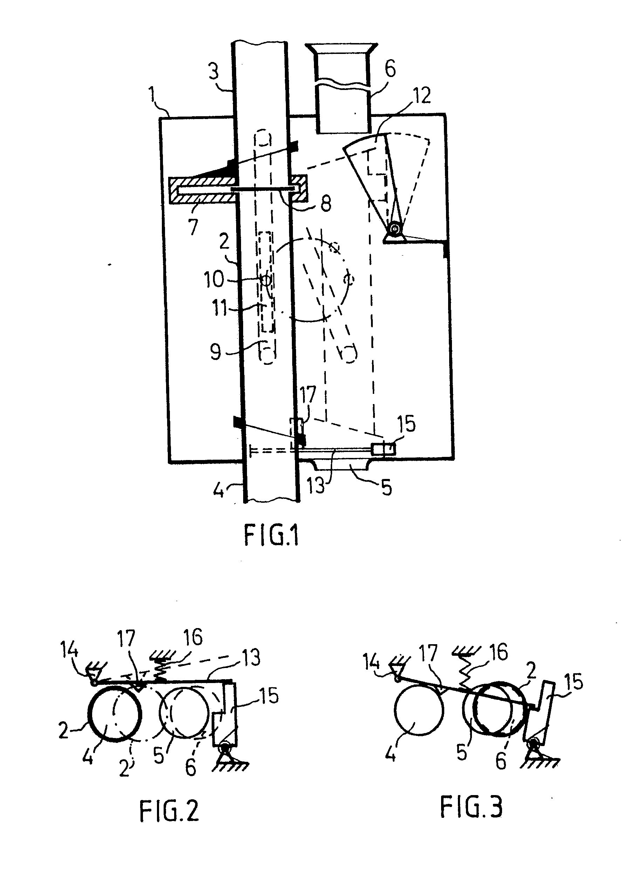

Die in der Fig. 1 dargestellte Rohrpoststation weist innerhalb eines Stationsgehäuses 1 ein Verbindungsrohr 2 auf, das in der dargestellten Lage in Flucht mit zwei Fahrrohrsträngen 3, 4 steht. Das Verbindungsrohr 2 ist senkrecht zu seiner Längsachse in zwei weitere Lagen schaltbar, in der es mit einer Empfangsöffnung 5 bzw. einem Senderohr 6 fluchtet. Das Verbindungsrohr 2 trägt in seinem oberen Bereich ein Schiebergehäuse 7, in dem ein Schieber 8 in zwei verschiedenen Stellungen schaltbar ist. In der dargestellten Lage des Schiebers 8 ist das Verbindungsrohr 2 abgeschlossen, wobei ein Luftstrom über eine gestrichelt eingezeichnete Luftleitung 9 erhalten bleibt. Der Luftstrom wirkt auf den unteren Fahrring einer nicht dargestellten ankommenden Rohrpostbüchse ein und führt zum Anliegen derselben am Schieber 8.

Zum nachfolgenden Ausschleusen einer empfangenen Rohrpostbüchse wird ein schematisch durch einen Zapfen 10 und eine Kulisse 11 sowie eine gestrichelt eingetragene Bewegungsbahn angedeutete Kurbelschwinge aktiviert. Während des Verschiebens des Verbindungsrohres 2 wird die flexibel ausgestaltete Luftleitung 9 entsprechend mitgenommen.

Bei Ankunft des Verbindungsrohres 2 in der mit der Empfangsöffnung 5 fluchtenden Lage fällt die im Verbindungsrohr 2 lagernde Rohrpostbüchse unter Einwirkung der Schwerkraft aus dem Stationsgehäuse 1 heraus in einen nicht dargestellten Aufnahmebehälter.

Sofern im Senderohr 6 eine absendebereite Rohrpostbüchse lagert, wird das Verbindungsrohr 2 über die mit der Empfangsöffnung 5 fluchtende Lage heraus so lange herausbewegt, bis eine mit dem Senderohr fluchtende Lage erreicht ist. In der letzten Phase dieser Bewegung wird der federnde und schwenkbar gelagerte Riegel 12, auf dem die im Senderohr 6 lagernde Rohrpostbüchse aufliegt, verschwenkt und damit die Rohrpostbüchse in das Verbindungsrohr 2 überführt. Die Rohrpostbüchse fällt damit bis auf die im unteren Bereich des Verbindungsrohres 2 angeordnete Büchsensperrvorrichtung.

Die Ausbildung und Funktion der Büchsensperrvorrichtung ist insbesondere den Fig. 2 und 3 zu entnehmen. Die Büchsensperrvorrichtung wird im wesentlichen durch ein Büchsenleitelement 13 gebildet, das in einem Schwenklager 14 gelagert und auf einem Auflager 15 abgestützt ist; eine Feder 16 drückt das Büchsenleitelement 13 gegen das Auflager 15. Das Büchsenleitelement 13 befindet sich unterhalb des Verbindungsrohres 2 und trägt einen Mitnehmer 17, der in die Bewegungsbahn des Verbindungsrohres 2 hineinragt.

Wie insbesondere der Fig. 3 bzw. einem Vergleich der Fig. 3 mit der Fig. 2 zu entnehmen ist, verschwenkt das Verbindungsrohr 2 das Auflager 15 in der Endphase seiner Verfahrbewegung zum Senderohr 6, so daß das Büchsenleitelement 13 auf eine tiefer gelegene Kante des Auflagers 15 herabgedrückt wird. Damit steht das Büchsenleitelement 16 im Bereich des lichten Querschnittes der Empfangsöffnung 5, so daß bei der Rückbewegung des Verbindungsrohres 2 von der mit dem Senderohr 6 fluchtenden Lage in seine Ausgangsstellung eine im Verbindungsrohr 2 lagernde Rohrpostbüchse auf dem Büchsenleitelement 13 entlanggeführt ist. In der Endphase der Rückbewegung des Verbindungsrohres 2 drückt die Zylinderwandung des Verbindungsrohres 2 den Mitnehmer 17 zur Seite, so
daß das Büchsenleitelement 16 aus seiner die
Empfangsöffnung 5 überdeckenden Lage herausgeschwenkt wird. Im Zuge des Einfahrens
des Verbindungsrohres 2 in seine mit dem Fahrrohrstrang 3, 4 fluchtende Lage gerät der Mitnehmer 17 außer Eingriff mit dem Verbindungsrohr 2 und das Büchsenleitelement 13 setzt erneut auf dem Auflager 15 auf.

**Patentansprüche**

1. Rohrpoststation mit einem innerhalb eines
Stationsgehäuses (1) fluchtend an einen von
oben und einen von unten in das Stationsgehäuse eintretenden Fahrrohrstrang (3, 4) anschließenden Verbindungsrohr (2), das an einem Ende
mittels eines in einem Schiebergehäuse (7) gelagerten und mittels einer ventilgesteuerten Luftleitung (9) überbrückten Schiebers (8) wahlweise abdeckbar oder freigebbar ist und das mit
seinem oberen Ende in die Flucht eines in die
obere Begrenzungsfläche des Stationsgehäuses
(1) eingefügten und mit einer Rückhaltevorrichtung (12) für abzusendende Rohrpostbüchsen
ausgestatteten Senderohres (6) sowie mit seinem unteren Ende in den Bereich einer Empfangsöffnung (5) in der unteren Begrenzungsfläche des Stationsgehäuses (1) bewegbar ist, dadurch gekennzeichnet, daß der Schieber (8) im
oberen Endbereich des Verbindungsrohres (2)
angeordnet und daß das Senderohr (6) und die
Empfangsöffnung (5) derart gegeneinander versetzt sind, daß das Verbindungsrohr (2) im Zuge
seiner Herausbewegung aus der Flucht der Fahrrohrstränge zunächst in die Flucht der Empfangsöffnung (5) und anschließend, dabei die
Rückhaltevorrichtung (12) aus ihrer wirksamen
Lage auslenkend, in die Flucht des Senderohres
(6) gestellt wird, sowie daß der Empfangsöffnung (5) eine Büchsensperrvorrichtung zugeordnet ist, die vom Verbindungsrohr (2) während
seiner Bewegung zwischen der mit der Empfangsöffnung (5) und der mit dem Senderohr (6)
fluchtenden Lage im Sinne der Überdeckung der
Empfangsöffnung (5) mittels eines Büchsenleitelementes (13) sowohl ausgelöst als auch während seiner Bewegung zwischen der mit der
Empfangsöffnung (5) und der mit den Fahrrohrsträngen (3, 4) fluchtenden Lage in ihre Empfangsöffnung (5) freigebende Ausgangslage zurückgestellt wird.

2. Rohrpoststation nach Anspruch 1, dadurch
gekennzeichnet, daß die Rückhaltevorrichtung
als mittels des Verbindungsrohres (2) gegen die
Kraft einer Rückstellfeder auslenkbarer Riegel
(12) ausgebildet ist.

3. Rohrpoststation nach Anspruch 1 oder 2,
dadurch gekennzeichnet, daß das Büchsenleitelement (13) unterhalb des Verbindungsrohres
(2) angeordnet und einerseits auf der dem unteren Fahrrohrstrang (4) zugewandten Seite der
Empfangsöffnung (5) schwenkbar gelagert, andererseits auf einem auf der anderen Seite der
Empfangsöffnung (5) angeordneten Auflager
(15) abgestützt ist, das zumindest bei Ankunft
des Verbindungsrohres (2) in seiner mit dem
Senderohr (6) fluchtenden Stellung derart ausgelenkt wird, daß das Büchsenleitelement (13)
unter der Einwirkung einer Feder (16) in die Empfangsöffnung (5) überdeckende Lage einschwenkt.

4. Rohrpoststation nach Anspruch 3, dadurch
gekennzeichnet, daß das Auflager (15) mit einem
Teilbereich seiner Oberfläche einen Anschlag für
das eingeschwenkte Büchsenleitelement (13)
bildet.

5. Rohrpoststation nach Anspruch 3 oder 4,
dadurch gekennzeichnet, daß das Büchsenleitelement (13) einen zumindest in seiner eingeschwenkten Lage in die Bewegungsbahn des
Verbindungsrohres (2) ragenden Mitnehmer (17)
trägt.

6. Rohrpoststation nach einem der Ansprüche 1 bis 5, dadurch gekennzeichnet, daß das
Verbindungsrohr um eine in seinem mittleren
Bereich gelegene Achse schwenkbar ist.

7. Rohrpoststation nach einem der Ansprüche 1 bis 6, dadurch gekennzeichnet, daß das
Verbindungsrohr (2) mittels einer Kurbelschwinge (10, 11) angetrieben ist, deren Totlagen der
fluchtenden Stellung des Verbindungsrohres (2)
mit den Fahrrohrsträngen (3, 4) bzw. mit dem
Senderohr (6) entsprechen.

**Claims**

1. A pneumatic tube station having a connecting tube (2) which is aligned within a station
housing (1) with a transport tube section (3),
which enters the station housing from above,
and with another (4) which enters the station
housing from below, and which, at one end, can
be alternatively covered or exposed by means of
a slide (8) positioned in a slide housing (7) and
bridged by means of a valve-controlled air line
(9), and which can be moved with its upper end
in alignment with a sending tube (6) which is
fitted into the upper boundary surface of the station housing (1) and is provided with a retaining
device (12) for pneumatic tube containers to be
dispatched, and which at its lower end can be
moved into the region of a receiving opening (5)
in the lower boundary surface of the station
housing (1), characterised in that the slide (8) is
arranged in the upper end region of the connecting tube (2) and that the sending tube (6) and the
receiving opening (5) are displaced relatively to
one another in such a way that, in the course of
its movement from alignment with the transport
tube sections, the connecting tube (2) is first set
in alignment with the receiving opening (5) and
subsequently into alignment with the sending
tube (6), whilst directing the retaining device (12)
out of its effective position; and that the receiving opening (5) is provided with a container stopping device which, during the movement of the connecting tube between the position which is in alignment with the receiving opening (5) and that which is in alignment with the sending tube (6), in covering the receiving opening (5) by means of a container guide element (13), is both released by the connecting tube (2) and during the movement of the latter between the position which is in alignment with the receiving opening (5) and that which is in alignment with the transmitting tube sections (3, 4), is reset into its intial position which exposes the receiving opening (5).

2. A pneumatic tube station according to claim 1, characterised in that the retaining device is in the form of a bar (12) which can be deflected against the force of a resetting spring by means of the connecting tube (2).

3. A pneumatic tube station according to claim.1 or 2, characterised in that the container guide element (13) is arranged below the connecting tube (2) and, on the one hand, is pivotably mounted on the side of the receiving opening (5) which faces the lower transport tube section (4), and, on the other hand, is supported on a support (15) which is arranged on the other side of the receiving opening (5) and which, at least on the arrival of the connecting tube (2) in its position in which it is in alignment with the sending tube (6), is deflected in such a way that the container guide element (13) swings into the position covering the receiving opening (5) under the influence of a spring (16).

4. A pneumatic tube station according to claim 3, characterised in that a portion of the surface of the support (15) forms a stop for the pivoted container guide element (13).

5. A pneumatic tube station according to claim 3 or 4, characterised in that the container guide element (13), at least in its pivoted position, supports a carrier (17) which projects into the path of movement of the connecting tube (2).

6. A pneumatic tube station according to one of claims 1 to 5, characterised in that the connecting tube is pivotable about an axis which is located in its central region.

7. A pneumatic tube station according to one of claims 1 to 6, characterised in that the connecting tube (2) is operated by means of a rocker arm (10, 11), whose dead positions correspond to the aligned positions of the connecting tube (2) with the transport tube sections (3, 4), or with sending tube (6), as the case may be.

**Revendications**

1. Poste pour l'acheminement par voie pneumatique, avec un tube de jonction (2) se raccordant, dans un boîtier de poste (1), avec alignement, à une ligne tubulaire de trafic (3, 4) pénétrant dans le boîtier de poste par le haut et par le bas, et susceptible, à une extrémité, d'être, au choix, recouvert ou dégagé par un coulisseau (8) monté dans un boîtier de coulisseau (7) et ponté à l'aide d'une conduite à air (9) commandée par une vanne, ledit tube de jonction étant susceptible d'être déplacé avec son extrémité supérieure venant en alignement avec un tube d'envoi (8) inséré dans la surface limite supérieure du boîtier de poste (1) et muni d'un dispositif de retenue (12) pour des cartouches à expédier, et avec son extrémité inférieure dans la zone d'une ouverture de réception (8) ménagé dans la surface limite inférieure du boîtier de poste (1), caractérisé par le fait que le coulisseau (8) est disposé dans la zone d'extrémité supérieure du tube de jonction (2) et que le tube d'envoi (6) et l'ouverture de réception (5) sond décalés entre eux de telle façon que le tube de jonction (2), durant son déplacement hors d'alignement avec les lignes tubulaires de trafic, est amené d'abord en alignement avec l'ouverture de réception (5) et ensuite, tout en déviant le dispositif de retenue (12) hors de sa position de travail, en alignement avec le tube d'envoi (6), et qu'à l'ouverture de réception (5) est associé un dispositif de verrouillage de la cartouche qui est, par le tube de jonction (2), et pendant le déplacément de celui-ci entre la position d'alignement avec l'ouverture de réception (5) et la position d'alignement avec le tube d'envoi (6), dans le sens de la couverture de l'ouverture de réception (5), déclenché à l'aide d'un élément de guidage de la cartouche (13) ainsi que ramené dans sa position initiale dégageant l'ouverture de réception (5), pedant son déplacement entre la position d'alignement avec l'ouverture de réception (5) et la position d'alignement avec les lignes tubulaires de trafic (3, 4).

2. Poste pour l'acheminement par voie pneumatique selon la revendication 1, caractérisé par le fait que le dispositif de retenue est réalisé sous la forme d'un verrou (12) susceptible d'être dévié au moyen du tube de jonction (2), à l'encontre de la force d'un ressort de rappel.

3. Poste pour l'acheminement par voie pneumatique selon la revendication 1 ou 2, caractérisé par le fait que l'élément de guidage de la cartouche (13) est disposé en-dessous du tube de jonction (2) et, d'une part, il est monté, de façon à pouvoir basculer sur le côté de l'ouverture de réception (5) qui est voisine de la ligne tubulaire de trafic supérieure (4) et porte, d'autre part, sur un appui (15) qui est disposé sur l'autre côté de l'ouverture de réception (5), lequel, lorsque le tube de jonction (2) vient dans sa position d'alignement avec le tube d'émission (6), est dévié de telle façon que l'élément de guidage de la cartouche (13) bascule, sous l'action d'un ressort (16) dans la position de recouvrement de l'ouverture de réception (5).

4. Poste pour l'acheminement par voie pneumatique selon la revendication 3, caractérisé par le fait que l'appui (15) forme, avec une zone partielle de sa surface, une butée pour l'élément de guidage de la cartouche (13), qui a été basculé.

5. Poste pour l'acheminement par voie pneumatique selon la revendication 3 ou 4, caractérisé par le fait que l'élément de guidage de la cartouche (13) porte un entraîneur (17) qui pénètre, au moins dans sa position basculée, dans la trajectoire de déplacement du tube de jonction (2).

6. Poste pour l'acheminement par voie pneumatique selon l'une des revendications 1 à 5, caractérisé par le fait que le tube de jonction est susceptible d'être basculé autour d'un axe qui est situé dans sa partie médiane.

7. Poste pour l'acheminement par voie pneumatique selon l'une des revendications 1 à 6, caractérisé par le fait que le tube de jonction (2) est entraîné à l'aide d'un mécanisme à manivelle et bielle oscillante (10, 11) dont les points morts correspondent à la position d'alignement du tube de jonction (2) avec les lignes tubulaires de trafic (3, 4) et avec le tube d'envoi (6).

FIG.1

FIG.2

FIG.3